# EUROPEAN PATENT APPLICATION

(11) **EP 1 471 731 A2**
(43) Date of publication of application: **27.10.2004**
(21) Application number: 04251905.8
(22) Date of filing: 30.03.2004
(51) Int. Cl.: H04N 5/225

(54) **Mounting structure for compact camera module**

(30) Priority: 31.03.2003 JP 2003096347
(71) Applicant: Mitsumi Electric Co., Ltd., Tama-shi, Tokyo 206-8567 (JP); Kabushiki Kaisha Toshiba, Tokyo 105-8001 (JP)
(72) Inventor: Ajiki, Satoshi, c/o Mitsumi Electric Co. Ltd., Yamagata-shi Yamagata 990-2251 (JP); Yaegashi, Kazuhiro, c/o Mitsumi Electric Co. Ltd., Yamagata-shi Yamagata 990-2251 (JP); Furusawa, Yukihiro, c/o Mitsumi Electric Co. Ltd., Yamagata-shi Yamagata 990-2251 (JP); Nakajo, Hironori, Minato-ku Tokyo 105-8001 (JP); Sasaki, Michio, Minato-ku Tokyo 105-8001 (JP)
(74) Representative: Simpson, Alison Elizabeth Fraser

(57) **Abstract**

A mounting structure is disclosed that is capable of reliably installing a compact camera module into a socket while maintaining a good electrical connection between them. The mounting structure includes an electrode pad formed in a lower portion of the compact camera module, a contacting member having a contacting end and a springy portion disposed in the socket, and a depressed portion formed on the lower portion of the compact camera module to accommodate the springy portion of the contacting member so that the lower portion of the compact camera module does not make contact with the springy portion of the contacting member when the lower portion of the compact camera module is inserted into the socket. Therefore, the springy portion supplies a sufficiently large springy force to reliably bright the contacting end into contact with the electrode pad, and this maintains a good electrical connection between the contacting end and the electrode pad.

## Description

### BACKGROUND OF THE INVENTION

### 1. Field of the Invention

The present invention relates to a mounting structure for installing a compact camera module into a socket, particularly, a mounting structure for installing a compact camera module equipped in an electronic device such as a cellular phone into a socket, and the compact camera module installed in the socket.

### 2. Description of the Related Art

In the related art, a compact camera module is directly attached to a circuit board of an electric device by soldering. Alternatively, the compact camera module is attached to the circuit board by installing the compact camera module into a socket attached to the circuit board by soldering. It is preferable to use a socket because it is easy to exchange and repair the compact camera module.

In the related art, the compact camera module, which includes two independent components, an image pickup device and a lens holder, is inserted and fitted into a socket in the following way.

Contacting members are formed on the bottom of the socket, and electrode pads are formed on the back side of the image pickup device. The image pickup device is inserted into the socket, and the lens holder is joined with the outer surface of the socket to press the image pickup device to move downward. Thereby, the electrode pads on the back side of the image pickup device come into contact with the contacting members in the socket.

Japanese Laid Open Patent Application No. 2001-188155, particularly, FIG. 5b, discloses an invention related to this technique.

With the above configuration, the electrode pads are in firm contact with the contacting members, and this ensures a good electrical connection between the electrode pads and the contacting members. However, the contacting between the electrode pads and the contacting members imposes a force on the compact camera module in the direction of moving the compact camera module out. For example, when the compact camera module receives a shock, the image pickup device is apt to be separated from the socket. Therefore, there arises a problem in reliability of the compact camera module.

To solve the problem, it is proposed to arrange the electrode pads on the outer side surface of the compact camera module, and arrange the contacting members on the inner side surface of the socket, so that the compact camera module is sandwiched by the contacting members when the compact camera module is fitted into the socket. With such a configuration, the compact camera module does not receive a force causing separation from the socket.

However, considering the case of installing a compact camera module in a cellular phone, because the cellular phone is small in size, it is required to reduce the size of the compact camera module as much as possible. When the socket is made small to satisfy this requirement, the electrical connection between the contacting members and the electrode pads may be degraded. Even when using the former configuration in which the electrode pads are arranged on the back side surface of the compact cameral module and ensure good electrical connection, it is desirable to improve reliability of installing the compact camera module into the socket.

### SUMMARY OF THE INVENTION

According to a first aspect of the present invention, there is provided a mounting structure for installing a compact camera module into a socket, the mounting structure comprising an electrode pad formed in a lower portion of the compact camera module that includes a lens and a solid image pickup device; a contacting member having a contacting end and a springy portion disposed in the socket, the electrode pad and the contacting end being in contact when the lower portion of the compact camera module is inserted into the socket; and a depressed portion formed on the lower portion of the compact camera module to accommodate the springy portion of the contacting member so that the lower portion of the compact camera module does not make contact with the springy portion of the contacting member when the lower portion of the compact camera module is inserted into the socket.

According to a second aspect of the present invention, there is provided a mounting structure for installing a compact camera module into a socket, the mounting structure comprising an electrode pad formed in a lower portion of the compact camera module that includes a lens and a solid image pickup device; a contacting member having a contacting end disposed in the socket, the electrode pad and the contacting end being in contact when the lower portion of the compact camera module is inserted into the socket; and an engagement member disposed in the socket to lock the compact camera module when the lower portion of the compact camera module is inserted into the socket so that the compact camera module does not separate from the socket.

According to a third aspect of the present invention, there is provided a mounting structure for installing a compact camera module into a socket, the mounting structure comprising an electrode pad formed in a lower portion of the compact camera module that includes a lens and a solid image pickup device; a contacting member having a contacting end disposed in the socket, the electrode pad and the contacting end being in contact when the lower portion of the compact camera module is inserted into the socket; a recess formed on the lower portion of the compact camera module; and a cutout formed on the socket at a position in correspondence to the recess, the recess facing the cutout when the lower portion of the compact camera module is inserted into the socket. The recess is engagable with a de-installation tool through the cutout when the lower portion of the compact camera module is inserted into the socket

According to a fourth aspect of the present invention, there is provided a compact camera module set, comprising a compact camera module including a lens and a solid image pickup device; and a socket. An electrode pad is formed in a lower portion of the compact camera module; a contacting member having a contacting end and a springy portion is disposed in the socket, the electrode pad and the contacting end being in contact when the lower portion of the compact camera module is inserted into the socket; and a depressed portion is formed on the lower portion of the compact camera module to accommodate the springy portion of the contacting member so that the lower portion of the compact camera module does not make contact with the springy portion of the contacting member when the lower portion of the compact camera module is inserted into the socket.

According to a fifth aspect of the present invention, there is provided a compact camera module set, comprising a compact camera module including a lens and a solid image pickup device; and a socket. An electrode pad is formed in a lower portion of the compact camera module that includes a lens and a solid image pickup device; a contacting member having a contacting end is disposed in the socket, the electrode pad and the contacting end being in contact when the lower portion of the compact camera module is inserted into the socket; and an engagement member is disposed in the socket to lock the compact camera module when the lower portion of the compact camera module is inserted into the socket so that the compact camera module does not separate from the socket.

According to a sixth aspect of the present invention, there is provided a compact camera module set, comprising a compact camera module including a lens and a solid image pickup device; and a socket. An electrode pad is formed in a lower portion of the compact camera module that includes a lens and a solid image pickup device; a contacting member having a contacting end is disposed in the socket, the electrode pad and the contacting end being in contact when the lower portion of the compact camera module is inserted into the socket; a recess is formed on the lower portion of the compact camera module; and a cutout is formed on the socket at a position in correspondence to the recess. The recess faces the cutout when the lower portion of the compact camera module is inserted into the socket, and the recess is engagable with a de-installation tool through the cutout when the lower portion of the compact camera module is inserted into the socket.

These and other objects, features, and advantages of the present invention will become more apparent from the following detailed description of the preferred embodiments given with reference to the accompanying drawings.

### BRIEF DESCRIPTION OF THE DRAWINGS

FIGs. 1A through 1D are perspective views of a compact camera module 10 and a socket 20, showing a mounting mechanism for installing the compact camera module 10 into the socket 20 according to an embodiment of the present invention;
FIG. 2A through FIG. 2C are exploded perspective views of a solid image pickup unit 40, where

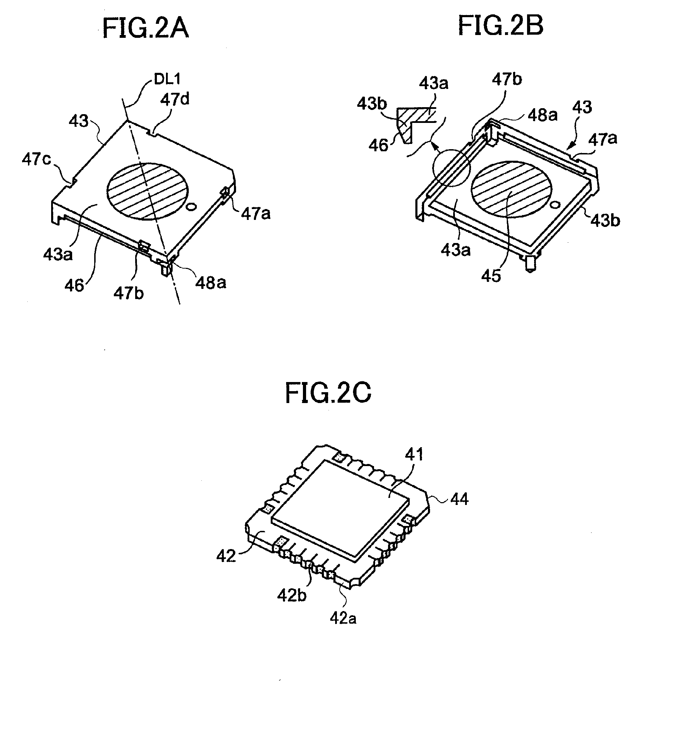

FIG. 2A is a perspective view of the upper side of a cover member 43 in the solid image pickup unit 40,
FIG. 2B is a perspective view of the lower side of the cover member 43, and
FIG. 2C is a perspective view of a circuit board 42;

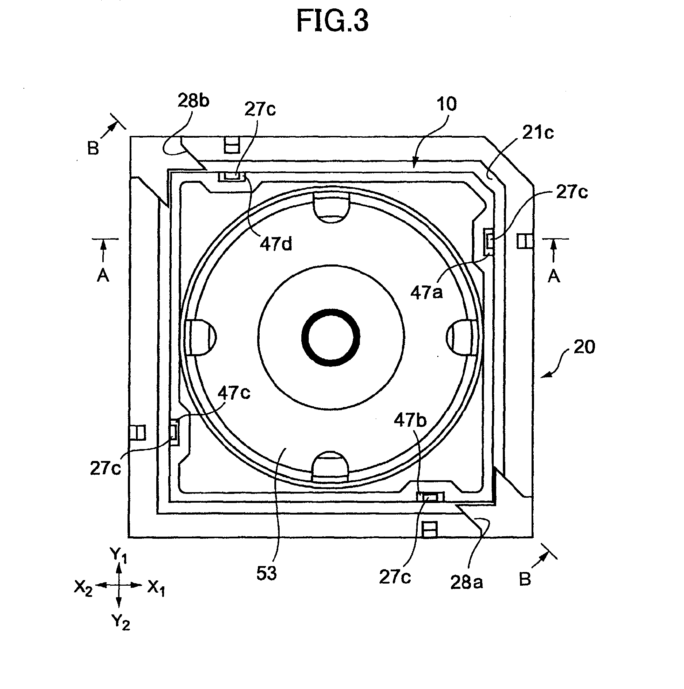

FIG. 3 is a plan view showing the compact camera module 10 installed in the socket 20;

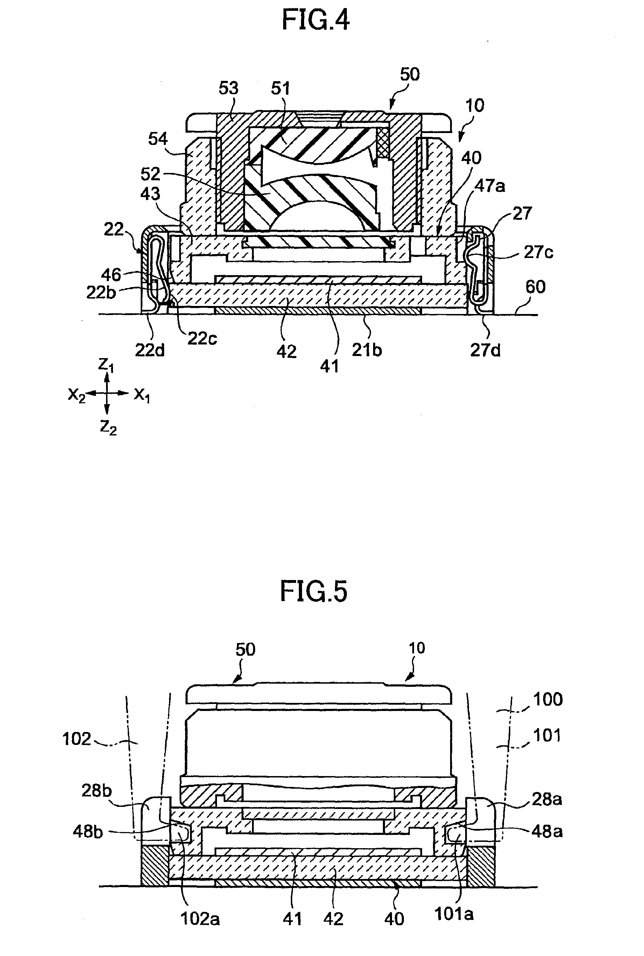

FIG. 4 is a cross-sectional view along the line AA in FIG. 3, showing the compact camera module 10 installed in the socket 20;
FIG. 5 is a cross-sectional view along the line BB in FIG. 3, showing the compact camera module 10 installed in the socket 20;

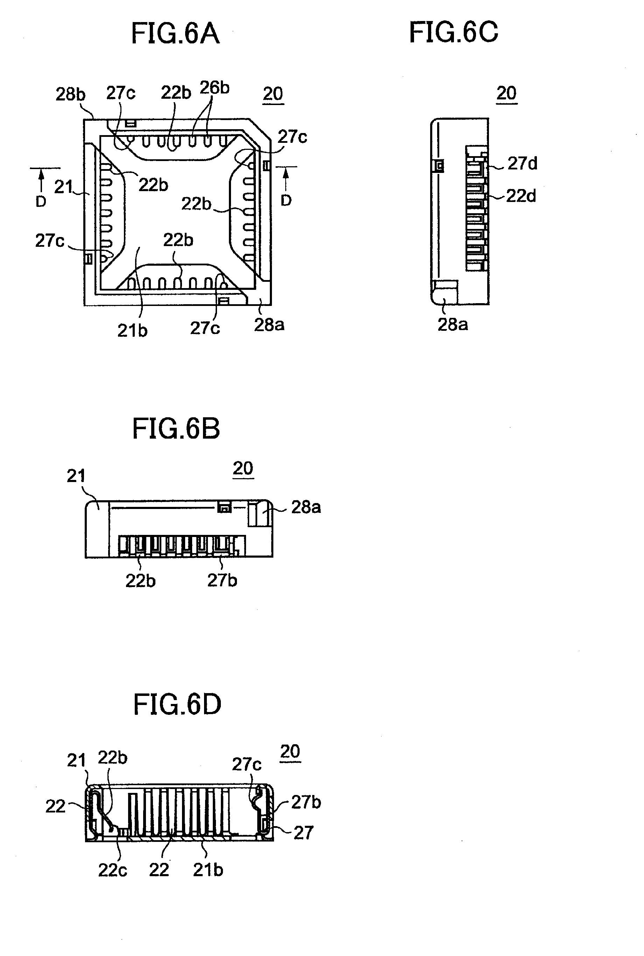

FIG. 6A is a plan view of the socket 20;
FIG. 6B is a front view of the socket 20;
FIG. 6C is a side view of the socket 20;
FIG. 6D is a cross-sectional view of the socket 20 along the line DD in FIG. 6A;

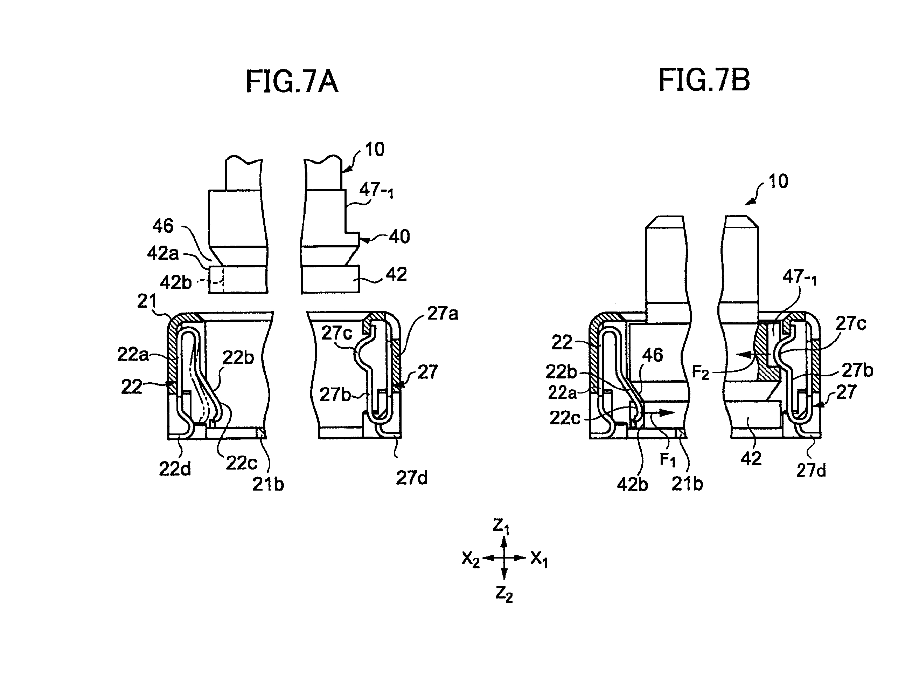

FIG. 7A and FIG. 7B are cross-sectional views of the compact camera module 10 and the socket 20, showing the operation of the mounting mechanism for installing the compact camera module 10 into the socket 20 according to the embodiment of the present invention; and

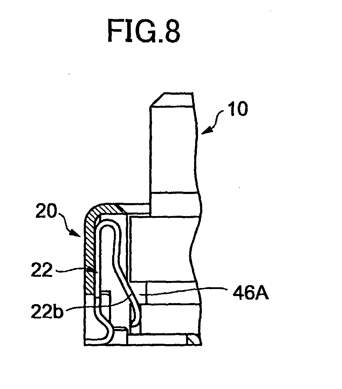

FIG. 8 is a cross-sectional view showing a modification of the mounting mechanism of the present embodiment for mounting the compact camera module 10 into the socket 20.

### DESCRIPTION OF THE EMBODIMENTS

Below, embodiments of the present invention are explained with reference to the accompanying drawings.

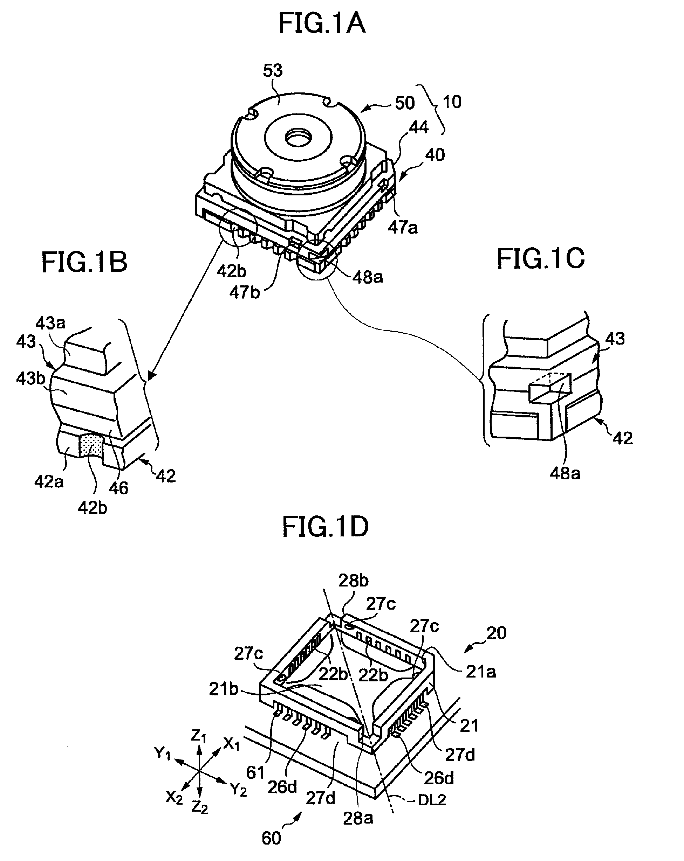

FIGs. 1A through 1D are perspective views of a compact camera module 10 and a socket 20, showing a mounting mechanism for installing the compact camera module 10 into the socket 20 according to an embodiment of the present invention, where FIG. 1A is a perspective view of the compact camera module 10, FIGs. 1B and 1C are perspective views of portions of the compact camera module 10, and FIG. 1D is a perspective view of the socket 20.

In FIGs. 1A through 1D and the figures subsequent thereto, a coordinate system is defined as follows. The axis X1-X2 and the axis Y1-Y2 are in a horizontal plane, and the axis Z1-Z2 is in the vertical direction; and the axis X1-X2, the axis Y1-Y2, and the axis Z1-Z2 are perpendicular to each other.

As illustrated in FIG. 1A, the compact camera module 10 includes a solid image pickup unit 40 and a lens unit 50 attached to the solid image pickup unit 40.

The components of the mounting mechanism formed on the compact camera module 10 and the socket 20 illustrated in FIG. 1B, FIG. 1C and FIG. 1D are explained below in detail.

As illustrated in FIG. 1D, the socket 20 is mounted on a mounting board 60 by soldering terminal portions 22d of signal contact members 22 and terminal portions 27d of ground contact members 27 in the socket 20 with the pad 61 of the mounting board 60. The structure of the socket 20 is descried in detail below with reference to FIG. 6A through FIG. 6D, and FIG. 7A and FIG. 7B.

FIG. 2A through FIG. 2C are exploded perspective views of the solid image pickup unit 40, where FIG. 2A is a perspective view of the upper side of the cover member 43 in the solid image pickup unit 40, FIG. 2B is a perspective view of the lower side of the cover member 43, and FIG. 2C is a perspective view of the circuit board 42.

As illustrated in FIG. 2A through 2C, the solid image pickup unit 40 includes a solid image pickup device 41 (FIG. 2C), a square circuit board 42 (FIG. 2C and FIG. 1C), and a square cover member 43 (FIG. 2A, FIG. 2B, and FIG. 1C).

The solid image pickup device 41, for example, is a CCD image pickup device, and is installed on the circuit board 42 as illustrated in FIG. 2C.

The cover member 43, for example, is formed from a synthesized resin, and is disposed on the upper side of the circuit board 42 to cover the solid image pickup device 41.

As illustrated in FIG. 2C, a corner 44 of the circuit board 42 is cut along a straight line. On the side surface 42a of the circuit board 42, a number of half-cut electrode pads 42b are formed. The half-cut electrode pads 42b are depressed inward and arranged in a row. These half-cut electrode pads 42b are formed by cutting a number of through holes arranged in a substrate in a row. Specifically, the inner surfaces of the through holes formed in a substrate are plated first to form electrodes. Then the substrate is cut along a line through the centers of the through holes, and thereby the half-cut electrode pads 42b are obtained.

As illustrated in FIG. 2A and FIG. 2B, as well as the enlarged view in FIG. 2B, the cover member 43 includes a square upper lid 43a and a square frame 43b joined to the periphery of the square upper lid 43a. An optical filter 45 is disposed on the upper lid 43a.

As illustrated in FIG. 2B, and also referring to FIG. 1B, on the outer side surface of the square frame 43b, the portion close to the lower end of the frame 43b is inclined inward, forming a depressed portion 46, which is depressed in the X1 direction, and thereby making the surface 42a, where the half-cut electrode pads 42b are formed, project in the X2 direction.

As illustrated in FIG. 2A and FIG. 2B, on the sides of the upper lid 43a, recesses 47a, 47b, 47c, and 47d are formed. In addition, at corners of the cover member 43 along a diagonal line, two recesses 48a and 48b are formed.

FIG. 3 is a plan view showing the compact camera module 10 installed in the socket 20.

As illustrated in FIG. 3, the recesses 47a, 47b, 47c, and 47d are formed on the sides of the upper lid 43a.

FIG. 4 is a cross-sectional view along the line AA in FIG. 3.

As illustrated in FIG. 4, the lens unit 50 includes a cylindrical lens holder 53 accommodating a lens 51 and a lens 52 and a cylindrical housing 54. On the inner surface of the housing 54, screws are formed, and the lens holder 53 is screwed into the housing 54 with the screws.

FIG. 5 is a cross-sectional view along the diagonal line BB in FIG. 3.

As illustrated in FIG. 5, the recesses 48a and 48b are formed at corners of the cover member 43 along a diagonal line.

FIG. 6A is a plan view of the socket 20.

FIG. 6B is a front view of the socket 20.

FIG. 6C is a side view of the socket 20.

FIG. 6D is a cross-sectional view of the socket 20 along the line DD in FIG. 6A.

As illustrated in FIG. 6A through 6D, and also referring to FIG. 1D, the socket 20 includes a frame body 21 formed from, for example, a synthesized resin, signal contact members 22 (including portions 22a, 22b, 22c, and 22d as described below) arranged on the inner side surface of the frame body 21, and ground contact members 27 (including portions 27a, 27b, 27c, and 27d as described below) also arranged on the inner side surface of the frame body 21. The frame body 21 has a bottom portion 21b.

The frame body 21 is square-shaped, in correspondence to the shape of the solid image pickup unit 40 viewed in the Z1 direction. In particular, a corner 21a of the frame body 21 is cut along a straight line to be in correspondence with the corner 44 of the circuit board 42, which is also cut along a straight line. In addition, corners of the frame body 21 along the diagonal line DL2 (FIG. 1D) are cut out, forming cutouts 28a and 28b.

FIG. 7A and FIG. 7B are cross-sectional views of the compact camera module 10 and the socket 20, showing the operation of the mounting mechanism for installing the compact camera module 10 into the socket 20 to produce a compact camera module set according to the embodiment of the present invention.

As illustrated in FIG. 7A and FIG. 7B, (make reference to FIG. 6A through FIG. 6D when necessary), each of the signal contact members 22 includes a fixed portion 22a fixed to the frame body 21, a springy arm portion 22b connecting with a reversed U-shaped upper end of the fixed portion 22a and extending inward and downward, that is, in the Z2 direction, a contacting portion 22c connecting with the springy arm portion 22b, and a terminal portion 22d extending downward from the lower end of the fixed portion 22a.

These signal contact members 22 are arranged at positions in correspondence to the half-cut electrode pads 42b.

As illustrated in FIG. 7A and FIG. 7B, (make reference to FIG. 6A through FIG. 6D when necessary), each of the ground contact members 27 includes a fixed portion 27a fixed to the frame body 21, a springy arm portion 27b connecting with a U-shaped lower end of the fixed portion 27a and extending in the Z1 direction, a hook portion 27c connecting with the springy arm portion 27b and having a bent portion projecting inward, and a terminal portion 27d extending downward from the lower end of the fixed portion 27a.

These ground contact members 27 are arranged at positions in correspondence to the recesses 47a, 47b, 47c, and 47d. The hook portion 27c is arranged at a position higher than the above contacting portion 22c in the Z1 direction.

Below, with reference to FIG. 7A and FIG. 7B, an explanation is made of the operation of installing the compact camera module 10 into the socket 20.

In FIG. 7A, the compact camera module 10 is installed in the socket 20, while in FIG. 7B, the compact camera module 10 is uninstalled from the socket 20.

To install the compact camera module 10 into the socket 20, first the orientation of the compact camera module 10 is aligned with the socket 20. Then, the compact camera module 10 is lowered down from the space above the socket 20, that is, in the Z2 direction, and the solid image pickup unit 40 is inserted into the socket 20. As illustrated in FIG. 7A, the solid image pickup unit 40 is pushed down until the solid image pickup unit 40 is in contact with the bottom 21b.

When fitting the solid image pickup unit 40 of the compact camera module 10 into the socket 20, the hook portion 27c of each ground contact member 27 is pushed by the periphery of the circuit board 42, and the springy arm portion 27b is bent and pushed to the side surface of the frame body 21. Similarly, the contacting portion 22c of each signal contact member 22 is pushed by the periphery of the circuit board 42, and the springy arm portion 22b is bent and pushed to the side surface of the frame body 21.

Because of the relative positions of the hook portion 27c and the contacting portion 22c in the socket 20, the solid image pickup unit 40 of the compact camera module 10 encounters the hook portion 27c first, and then the contacting portion 22c. When the solid image pickup unit 40 of the compact camera module 10 is in contact with the hook portion 27c, static electrical charge generated on the compact camera module 10 discharges through a ground of the mounting board 60. Thus, when the solid image pickup unit 40 comes in contact with the contacting portion 22c, there is no influence from the static electrical charge.

The compact camera module 10 is pushed down successively, until it is set to its final position, as illustrated in FIG. 7B and FIG. 4. In FIG. 4, the solid image pickup unit 40 of the compact camera module 10 is completely held in the socket 20.

The contacting portions 22c of the signal contact members 22 are pushed to fit into the half-cut electrode pads 42b. Because the half-cut electrode pads 42b are depressed relative to the surface 42a of the circuit board 42, comparing with the case in which the half-cut electrode pads 42b are formed on the surface 42a, the springy arm portions 22b of the signal contact members 22 project more to the inner side of the socket 20.

However, as described above, because the depressed portion 46 is formed on the cover member 43 of the solid image pickup unit 40, there is a space formed between the springy arm portions 22b and the solid image pickup unit 40. Therefore, the springy arm portions 22b of the signal contact members 22 project into the space provided by the depressed portion 46, and hence, the springy arm portions 22b of the signal contact members 22 do not make contact with the cover member 43 of the solid image pickup unit 40. For this reason, the springy force of the contacting portions 22c does not decrease, and the contacting portions 22c of the signal contact members 22 are pushed by a sufficiently large force F1 and in firm contact with the half-cut electrode pads 42b. Consequently, the contacting portions 22c are in good electrical contact with the half-cut electrode pads 42b.

The four sides of the solid image pickup unit 40 of the compact camera module 10 are pushed by the contacting portions 22c of the signal contact members 22. That is, the signal contact members 22 apply forces to the compact camera module 10 toward the center of the compact camera module 10, but do not apply forces to push out the compact camera module 10.

As illustrated in FIG. 7B (also referring to FIG. FIG. 3 and FIG. 4), the hook portions 27c of the ground contact members 27 are engaged with the corresponding recesses 47a, 47b, 47c, and 47d, due to a springy force F2 of the springy arm portions 27b of the ground contact members 27. Thereby, the four sides of the solid image pickup unit 40 of the compact camera module 10 are engaged by the hook portions 27c, thereby preventing unnecessary separation of the compact camera module 10 from the socket 20.

When the compact camera module 10 fitted in the socket 20 is further installed in a cellular phone, even when static electrical charge is generated on the compact camera module 10 during the use of the cellular phone, the static electrical charge dissipates through the ground of the mounting board 60, and this prevents electrostatic damage to the solid image pickup device 41.

Further, as illustrated in FIG. 5, the recesses 48a and 48b on the solid image pickup unit 40 of the compact camera module 10 are exposed in the cutouts 28a and 28b of the socket 20. This makes it easy to remove the compact camera module 10 from the socket 20, for example, to repair the compact camera module 10.

Specifically, as illustrated in FIG. 5, using a tool having two arms 101 and 102, the hooks 101a and 102a of the arms 101 and 102 are inserted into the recesses 48a and 48b through the cutouts 28a and 28b, and the tool is raised to separate the compact camera module 10 from the socket 20.

Because the recesses 48a and 48b are formed on the solid image pickup unit 40 of the compact camera module 10, and the cutouts 28a and 28b are formed on the socket 20, even though the solid image pickup unit 40 is completely held in the socket 20, by using a simple tool like the tool 100, it is easy to separate the compact camera module 10 from the socket 20.

FIG. 8 is a cross-sectional view showing a modification to the mounting mechanism of the present embodiment for installing the compact camera module 10 into the socket 20.

As illustrated in FIG. 8, instead of the inclined portion, the depressed portion 46 may also be formed by a stage-like portion, as the depressed portion 46A shown in FIG. 8.

In addition, instead of fixing the compact camera module 10 by the hook portions 27c of the ground contact members 27, a configuration may be adopted in which the socket 20 is fixed by hook portions formed on the compact camera module 10.

While the present invention has been described with reference to specific embodiments chosen for purpose of illustration, it should be apparent that the invention is not limited to these embodiments, but numerous modifications could be made thereto by those skilled in the art without departing from the basic concept and scope of the invention.

Summarizing the effect of the invention, because a depressed portion is formed on a compact camera module so that the compact camera module does not make contact with a springy portion of a contacting member when the compact camera module is inserted into a socket, a sufficiently large springy force of the springy portion of the contacting member is maintained, and a contacting end of the contacting member can be reliably brought into contact with an electrode pad on the compact camera module. As a result, it is possible to maintain a good electrical connection between the contacting end and the electrode pad.

In addition, because an engagement member is formed in the socket to lock the compact camera module when the compact camera module is inserted into the socket, even if the compact camera module receives a shock, the compact camera module can hardly depart from the socket.

In addition, because a grounding contacting member is provided, even if static electrical charge is generated on the compact camera module, it discharges through the grounding contacting member, and thus the compact camera module does not retain the charge, thereby, preventing electrostatic damage to the compact camera module.

In addition, a recess is formed on the compact camera module and a cutout is formed on the socket at positions corresponding to each other, even though the compact camera module is inserted in the socket, because the recess is accessible from the outside through the cutout, a de-installation tool can be used to reach the recess to easily separate the compact camera module from the socket.

This patent application is based on Japanese Priority Patent Application No. 2003-096347 filed on March 31, 2003, the entire contents of which are hereby incorporated by reference.

## Claims

1. A mounting structure for installing a compact camera module into a socket, the mounting structure comprising:
an electrode pad formed in a lower portion of the compact camera module that includes a lens and a solid image pickup device;
a contacting member having a contacting end and a springy portion disposed in the socket, the electrode pad and the contacting end being in contact when the lower portion of the compact camera module is inserted into the socket; and
a depressed portion formed on the lower portion of the compact camera module to accommodate the springy portion of the contacting member so that the lower portion of the compact camera module does not make contact with the springy portion of the contacting member when the lower portion of the compact camera module is inserted into the socket.

2. A mounting structure for installing a compact camera module into a socket, the mounting structure comprising:
an electrode pad formed in a lower portion of the compact camera module that includes a lens and a solid image pickup device;
a contacting member having a contacting end disposed in the socket, the electrode pad and the contacting end being in contact when the lower portion of the compact camera module is inserted into the socket; and
an engagement member disposed in the socket to lock the compact camera module when the lower portion of the compact camera module is inserted into the socket so that the compact camera module does not separate from the socket.

3. The mounting structure as claimed in claim 2, wherein
the socket comprises a grounding contacting member; and
the engagement member is a portion of the grounding contacting member.

4. A mounting structure for installing a compact camera module into a socket, the mounting structure comprising:
an electrode pad formed in a lower portion of the compact camera module that includes a lens and a solid image pickup device;
a contacting member having a contacting end disposed in the socket, the electrode pad and the contacting end being in contact when the lower portion of the compact camera module is inserted into the socket;
a recess formed on the lower portion of the compact camera module; and
a cutout formed on the socket at a position in correspondence to the recess, the recess facing the cutout when the lower portion of the compact camera module is inserted into the socket,
wherein
the recess is engagable with a de-installation tool through the cutout when the lower portion of the compact camera module is inserted into the socket.

5. A compact camera module set, comprising:
a compact camera module including a lens and a solid image pickup device; and
a socket,
wherein
an electrode pad is formed in a lower portion of the compact camera module;
a contacting member having a contacting end and a springy portion is disposed in the socket, the electrode pad and the contacting end being in contact when the lower portion of the compact camera module is inserted into the socket; and
a depressed portion is formed on the lower portion of the compact camera module to accommodate the springy portion of the contacting member so that the lower portion of the compact camera module does not make contact with the springy portion of the contacting member when the lower portion of the compact camera module is inserted into the socket.

6. A compact camera module set, comprising:
a compact camera module including a lens and a solid image pickup device; and
a socket,
wherein
an electrode pad is formed in a lower portion of the compact camera module that includes a lens and a solid image pickup device;
a contacting member having a contacting end is disposed in the socket, the electrode pad and the contacting end being in contact when the lower portion of the compact camera module is inserted into the socket; and
an engagement member is disposed in the socket to lock the compact camera module when the lower portion of the compact camera module is inserted into the socket so that the compact camera module does not separate from the socket.

7. The compact camera module set as claimed in claim 6, wherein
the socket comprises a grounding contacting member; and
the engagement member is a portion of the grounding contacting member.

8. A compact camera module set, comprising:
a compact camera module including a lens and a solid image pickup device; and
a socket,
wherein
an electrode pad is formed in a lower portion of the compact camera module that includes a lens and a solid image pickup device;
a contacting member having a contacting end is disposed in the socket, the electrode pad and the contacting end being in contact when the lower portion of the compact camera module is inserted into the socket;
a recess is formed on the lower portion of the compact camera module; and
a cutout is formed on the socket at a position in correspondence to the recess, the recess facing the cutout when the lower portion of the compact camera module is inserted into the socket, the recess being engagable with a de-installation tool through the cutout when the lower portion of the compact camera module is inserted into the socket.
